# EUROPEAN PATENT SPECIFICATION

(11) **EP 2 690 420 B1**
(45) Date of publication and mention of the grant of the patent: **13.08.2014**
(21) Application number: 12305674.9
(22) Date of filing: 14.06.2012
(51) Int. Cl.: G01M 11/00, H04B 10/071

(54) **Method of estimating a reflection profile of an optical channel**
Verfahren zur Schätzung eines Reflexionsprofils eines optischen Kanals
Procédé pour estimer un profil de réflexion d'un canal optique

(43) Date of publication of application: 29.01.2014
(73) Proprietor: Alcatel Lucent, 75007 Paris (FR)
(72) Inventor: Meersman, Stijn, 9250 Waasmunster (BE); Vankeirsbilck, Rudi, 8791 Beveren-Leie (BE); Straub, Michael, 75433 Maulbronn (DE); Hehmann, Jörg, 71263 Weil der Stadt (DE); Clybouw, Yannick, 9000 Gent (BE)
(74) Representative: Mildner, Volker

(56) References cited:
- EP-A1- 0 605 301
- EP-A1- 2 464 034
- US-A- 5 453 827
- CHAMPAVERE A ET AL: "The Effect of Reflected and Backscattered Live Traffic on CWDM OTDR Measurements", IEEE PHOTONICS TECHNOLOGY LETTERS, IEEE SERVICE CENTER, PISCATAWAY, NJ, US, vol. 16, no. 7, 1 July 2004 (2004-07-01), pages 1697-1699, XP011114355, ISSN: 1041-1135, DOI: 10.1109/LPT.2004.828439
- ALBERTO ROSSARO ET AL: "Spatially Resolved Chromatic Dispersion Measurement by a Bidirectional OTDR Technique", IEEE JOURNAL OF SELECTED TOPICS IN QUANTUM ELECTRONICS, IEEE SERVICE CENTER, PISCATAWAY, NJ, US, vol. 7, no. 3, 1 May 2001 (2001-05-01), XP011061952, ISSN: 1077-260X

## Description

### Field of the invention

The invention relates to a method of and a device for estimating a reflection profile of an optical channel.

### Background

These days, access networks, also called passive optical networks (PON), are used for connecting a plurality of customers to a core network of data transportation.

In such an access network, the interconnection between the core network and the access network is given at a so-called central office, which contains an optical line terminal (OLT).

The OLT is connected via at least one optical fiber, preferably called optical feeder fiber, to a so-called remote node. At this remote node, an optical downlink signal transmitted by the OLT is split onto different optical branches, to which one or more customers are connected by means of optical network units (ONU).

The customers send via the optical branches optical uplink signals towards the remote node, which combines these optical uplink signals to a combined uplink signal and transmits the combined signal via the optical feeder fiber to the central office, which contains the OLT.

In order to determine the transmission properties of the transmission channel into which a device transmits an optical signal, a measurement technique of optical time domain reflectometry (OTDR) can be applied. In such an OTDR measurement, a reflection profile of the transmission channel is estimated. Preferably, the technique of OTDR is carried out at the OLT.

For the purpose of OTDR, an optical measurement signal in the form of an optical pulse may be transmitted into the optical channel, which comprises one or more optical fibers. Such Optical fibers are usually made of inhomogeneous material, which causes backscattering of the optical measurement signal. The backscattered optical signal, preferably called received response signal, may then be recorded over time as the reflection profile. Knowing the propagation speed of the optical signals within the optical fibers, the received response signal can be converted from the time domain to a distance.

Different imperfections of the optical channel, such as e.g. an open connector or a dirty fiber-connector, may cause characteristic increased or decreased backscattering of the measurement signal, which in turn may be observed as reflection peaks within the reflection profile. By examining the reflection profile and the reflection peaks contained in the profile, one may derive, at which distance an imperfection is present within the optical channel. Instead of using a single optical pulse as the measurement signal, a more advanced technique of OTDR may be employed. This advanced technique makes use of an optical signal that is modulated in its amplitude in dependence on a correlation sequence. The received response signal is first recorded and then used for determining the reflection profile. This is achieved, by correlating a time-discrete version of the received response signal with the initial correlation sequence itself. In the case, that the auto-correlation function of the correlation sequence is equal to or approximated by the dirac delta function, the result of the correlation yields an estimate of the impulse response of the optical channel in the time domain, which is an approximation of the reflection profile.

When transmitting an optical transmission signal carrying transmission data into the optical channel using a transmission device, it is one possibility to carry out the technique of OTDR, by using a further, separate device. The transmission device and the separate OTDR device are in this case both coupled to the same optical channel, preferably via an optical coupler.

A more advanced technique is that of embedded OTDR (eOTDR), in which the transmission device itself contains the hardware for generating the optical transmission signal as well as the hardware that is necessary for carrying out an OTDR measurement. Preferably, the optical transmission signal is directly modulated in dependence on a correlation sequence, wherein the frequency of this direct modulation is chosen, such that it does not disturb data reception at a receiving side. After transmitting into the optical channel the optical transmission signal, which carries the directly modulated measurement signal, the received response signal of the optical channel can be obtained, by filtering out that frequency, at which the optical transmission signal was modulated. This received response signal can then be used for determining a reflection profile via the technique of signal correlation as it has been described previously above.

The document US 5,453,827 A discloses a system for measuring a reflection profile of an optical transmission channel, wherein an OTDR measurement signal is filtered by an optical filter before providing the measurement signal to an OTDR measurement device, wherein the optical filter is designed to filter out a crosstalk signal component.

### Summary

Proposed is a method of estimating a reflection profile of an optical channel. The method comprises different steps.

A measured reflection profile of the optical channel is provided. One or more reflection peaks are estimated within the measured reflection profile.

A residual reflection profile is determined, by removing the estimated reflection peaks from the measured reflection profile. Furthermore, a modified residual reflection profile is determined, by modifying one or more estimated crosstalk frequency components within the residual reflection profile.

Finally, the estimated reflection profile is determined, by superposing the estimated reflection peaks and the modified residual reflection profile.

In order to grasp the advantages of the proposed method, the following aspects may be taken into consideration.

When carrying out a method of embedded OTDR, the hardware components carrying out the measurement of the reflection profile may experience an impact of crosstalk noise caused by other hardware components present within one same device. Such crosstalk noise may degrade the measured response signal and thus also the measured reflection profile. Crosstalk noise may be present especially, in the case that the integration of the OTDR devices into the transmission device is given as a Small Form-Factor Pluggable (SFP).

For obtaining a reliable estimated reflection profile, the impact of crosstalk noise needs to be reduced. One countermeasure may be, to shield the hardware devices, in order to reduce the amount crosstalk noise caused by electromagnetic fields generated by the hardware devices. Such a countermeasure is on the one hand cumbersome and on the other hand may also be expensive, due to space restrictions given for a device carrying out eOTDR.

In order to remove the crosstalk noise from the measured reflection profile, filtering techniques may be applied. Such filtering techniques may not only have an impact on the crosstalk noise, but also on reflection peaks present within the measured reflection profile. As it has been previously described, such reflection peaks should remain present within a filtered reflection profile, in order to detect imperfections of the optical channel.

The proposed method first estimates the reflection peaks and then removes these peaks, in order to yield a residual reflection profile. Next, the residual reflection profile is filtered, such that estimated crosstalk frequency components are modified. Due to the fact, that crosstalk usually causes one or more spectral peaks within the spectrum of a reflection profile, the crosstalk noise may be reduced, by modifying the estimated crosstalk frequency components. After modifying the crosstalk frequency components, the yielded modified residual reflection profile is superposed with the previously estimated reflection peaks.

Thus, the proposed method of estimating a reflection applies a filtering technique, in which estimated reflection peaks are first separated from the measured reflection profile, before separately filtering the crosstalk noise in the frequency domain, and then finally superposing the filtering result with the preserved reflection peaks again. Thus, this filtering technique for reducing crosstalk impact avoids a severe degradation of the reflection peaks present within the finally estimated reflection profile. Therefore, the estimated reflection profile contains well preserved reflection peaks. Thus, the estimated reflection profile may be used for detecting imperfections of the optical channel via the reflection peaks, as well as reliably estimating the attenuation profile of the optical channel due to reduced crosstalk noise.

### Brief description of the Figures

Figure 1 shows a flowchart of the proposed method according to an embodiment.
Figures 2a and 2b show a measured reflection profile in the linear and the logarithmic domain.
Figure 3 shows a second derivative of the measured reflection profile in the linear domain.
Figure 4a shows estimated reflection peaks.
Figure 4b shows a residual reflection profile.
Figure 5 shows a magnitude of a spectrum of the residual reflection profile.
Figure 6 shows a first derivative of the magnitude.
Figure 7 shows a modified residual reflection profile.
Figures 8a and 8b show an estimated reflection profile in the linear and the logarithmic domain, respectively, plotted over a time scale on the abcissa.
Figures 9a and 9b show the estimated reflection profile in the linear and the logarithmic domain, respectively, plotted over a distance scale on the abcissa.
Figure 10 shows a proposed device according to an embodiment.

### Description of embodiments

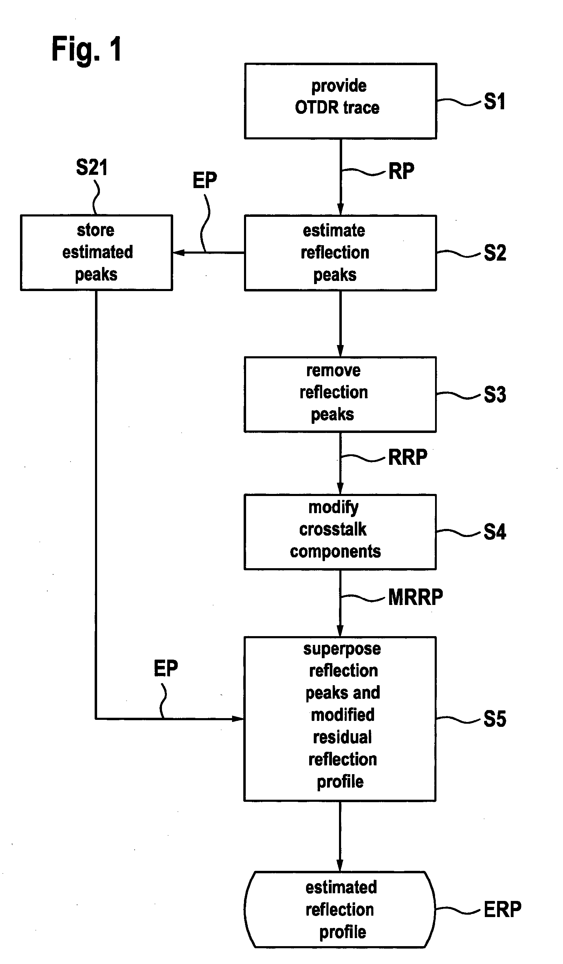

Figure 1 shows a flowchart of the proposed method according to a preferred embodiment. In the step Sl, an OTDR trace as a measured reflection profile of an optical channel is provided. This OTDR trace may be measured by a device carrying out also the proposed method. According to an alternative solution, the OTDR trace may be provided by a first device to a second device via a data interface of the second device, which receives the data of the OTDR trace, and which then provides the OTDR trace to further sub-devices of the second device carrying out the further steps of the proposed method.

The OTDR trace is preferably a measured reflection profile in the form of a time discrete sampled signal. Preferably, the sampling frequency of the sampled measured reflection profile lies within the range of several megahertz, preferably 40 MHz. Such a sampling frequency of 40 MHz corresponds to a sampling interval of 25 ns. Taking into consideration typical propagation speeds of optical signals within optical fibers, the sampling interval of 25 ns corresponds to a resolution in distance of 2.5 m.

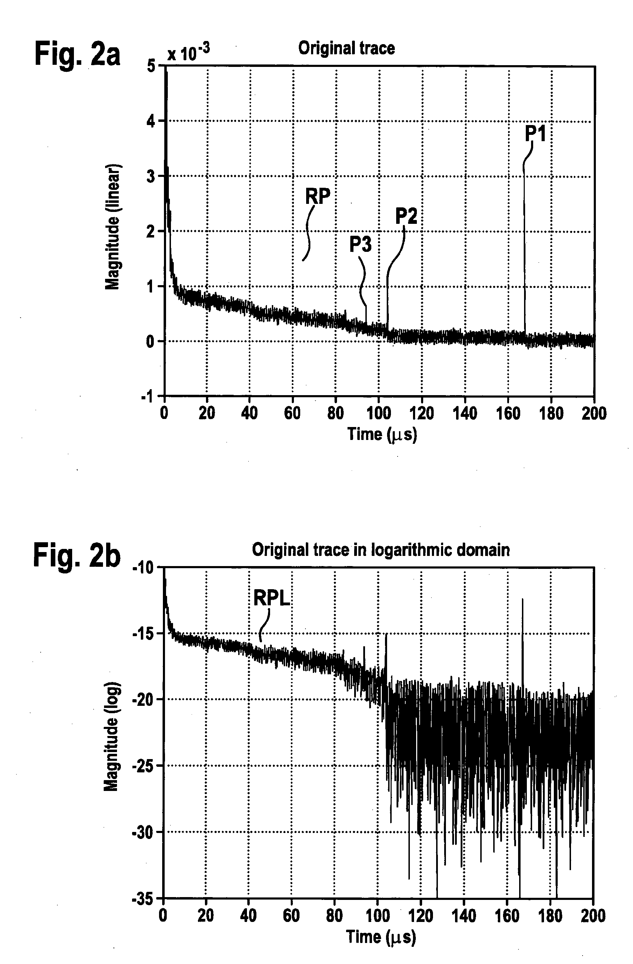

The measured reflection profile RP is provided to a next step S2 of the proposed method. Figure 2a shows an example of a measured reflection profile RP in the linear domain, wherein a timescale corresponding to a time resolution in microseconds is shown along the abcissa. The reflection profile RP contains in this example at least three reflection peaks P1, P2, P3, as well as crosstalk noise, which is clearly visible as a noise signal overlaying the reflection profile RP.

The reflection profile RP of Figure 2a is once more shown in Figure 2b as a reflection profile RPL in the logarithmic domain. Both refection profiles RP and RPL of the Figures 2a and 2b are plotted here as time continuous signals over a time scale of microseconds, wherein a person skilled in the art will acknowledge, that such time continuous plots may represent time discrete and sampled reflection profiles. Thus, the plotted values of the reflection profiles RP and RPL can be considered as time discrete values plotted over discrete indices corresponding to the timescales shown in the Figures 2a and 2b.

Coming back to Figure 1, reflection peaks EP present within the reflection profile RP are estimated within the step S2. These estimated reflection peaks EP may then be stored in a separate step S21. The measured reflection profile RP is provided in the time domain, while the estimated reflection peaks EP are preferably also estimated in the time domain. For estimating the reflection peaks, a second derivative of the measured reflection profile is determined. This may be obtained, by determining for the time discrete measured reflection profile the signal of second differential order in the time domain. Having yielded this second derivative, a reflection peak is estimated to be present for those time discrete indices, for which the second derivative exceeds a defined threshold.

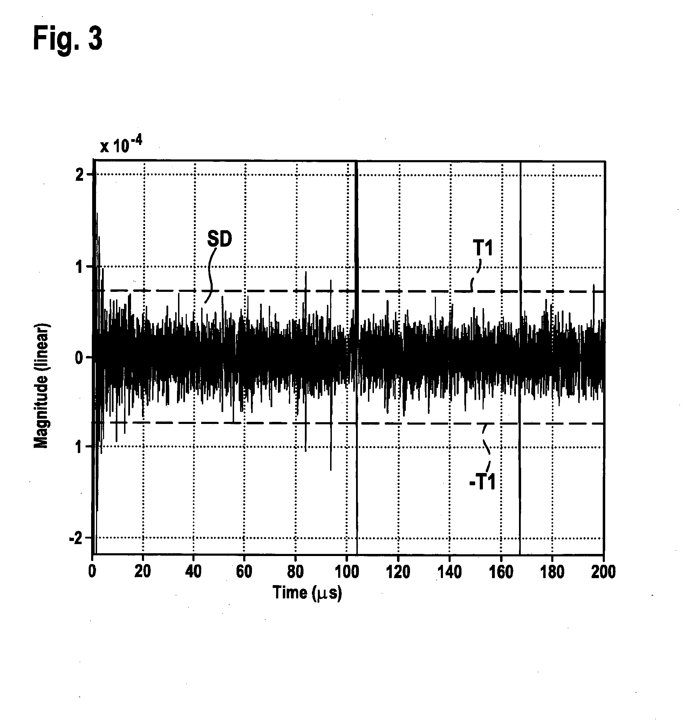

Figure 3 shows the second derivative SD together with the threshold T1. The threshold T1 may be determined, by determining the median absolute value of the second derivative SD. Preferably, the threshold T1 is chosen to this median absolute value multiplied by a fixed factor. The fixed factor is preferably chosen within the range between the values 1 and 10. In a preferred embodiment, the fixed factor is chosen to the value 6.

As it was previously outlined, for estimating the presence of one or more reflection peaks, those time-discrete indices of the second derivative are determined, for which the second derivative exceeds the threshold. The estimated reflection peaks are then determined as those values of the measured reflection profile RP, whose time-discrete indices correspond to or are equal to the determined time-discrete indices.

Preferably, not only these determined values of the measured reflection profile RP are used as the estimated the reflection peaks and then removed, but also further values of the measured reflection profile RP are determined used as the estimated reflection peaks. These further values are those, whose corresponding further time-discrete indices lie within predefined time windows, which are centered around the previously determined time-discrete indices. Thus, preferably, a combined set of values corresponding to a combined set of time-discrete indices is used for estimating the reflection peaks, wherein the combined set of time-discrete indices is a combination of the previously determined set of time-discrete indices and the further time-discrete indices.

For a sampling frequency of 40 MHz for the measured reflection profile RP, a time window has preferably a width of 8 time discrete indices, which corresponds to 200 ns or a distance resolution of 20 m. Furthermore, the timely width of the time window corresponds to a full-width-at-half-maximum of an optical pulse, when using only a single optical pulse for OTDR measurement instead of a correlation sequence. Even furthermore, the timely width of the time window corresponds to a timely width of a dirac-delta function resulting from OTDR measurement using a correlation sequence.

The time window is preferably a weighting window, which defines weighting factors for the values of the measured reflection profiles falling within the time window. According to a first solution, the weighting window is a simple boxcar window applying a constant factor of 1 to those value of the measured reflection profile, which fall within the time window. According to another solution, the weighting window is a raised cosine window, which applies different values within the range 0 to 1 to those values of the measured reflection profile, which fall within the time window. By using such a raised cosine window, a more smooth transition of values representing a reflection peak and values representing no reflection peak is achieved.

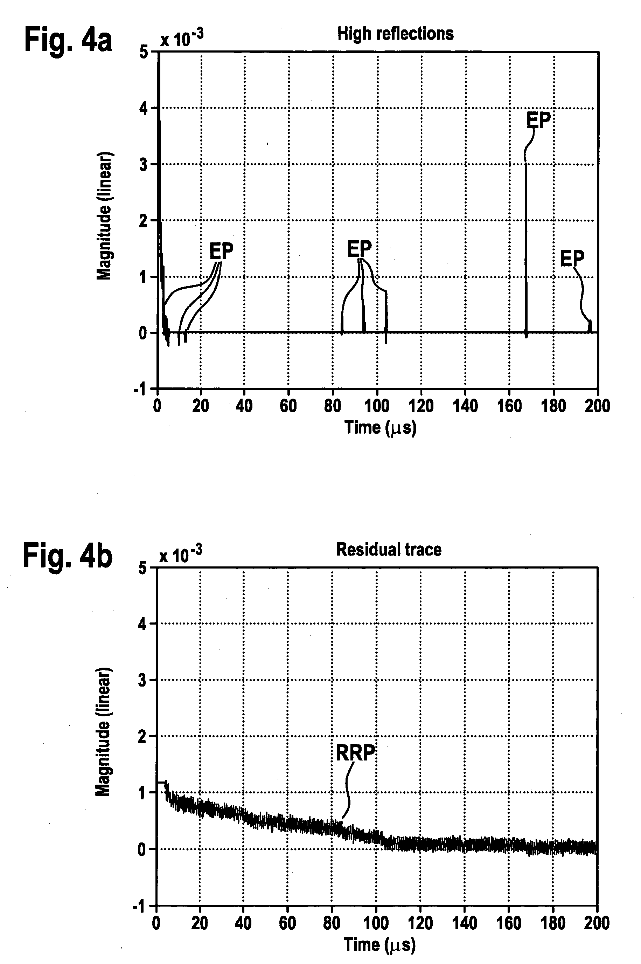

Figure 4a shows a number of estimated reflection peaks EP in the linear domain.

Coming back to Figure 1, the estimated reflection peaks are removed from the measured reflection profile RP within a step S3. This yields a residual reflection profile RRP. Figure 4b shows the residual reflection profile RRP in the linear domain. The reflection peaks are removed from the residual reflection profile RRP, by replacing the initial values of the measured reflection profile at those indices, at which reflection peaks were detected, by the mean value of the reflection profile of those indices, which are adjacent to the indices at which reflection peaks were detected.

Coming back to Figure 1, the obtained residual reflection profile RRP is then used for filtering out the crosstalk noise.

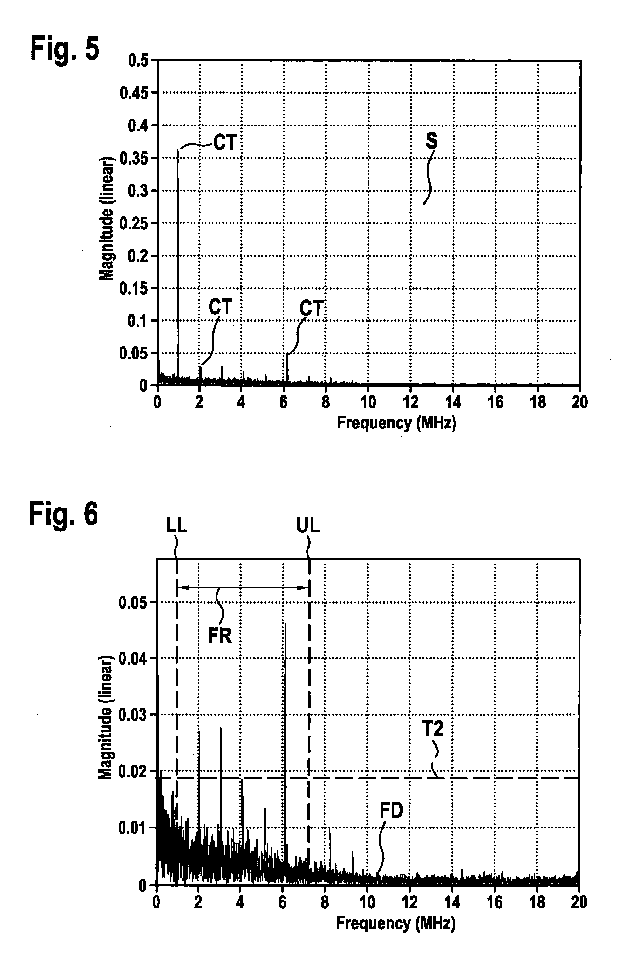

Figure 5 shows a magnitude S of a spectrum of a residual reflection profile. Frequency components CT of the crosstalk noise are also indicated in Figure 5. A modified residual reflection profile is determined, by modifying estimated crosstalk frequency components within the residual reflection profile's spectrum.

Such modification is carried out in the step S4 of the Figure 1. The crosstalk frequency components CT shown in Figure 5 are estimated in the frequency domain and also modified in the frequency domain. Such crosstalk frequency components CT can be expected as spectral peaks within the lower frequency domain, while normally no discontinuities are expected for higher frequencies within the residual reflection profile's spectrum.

For estimating the crosstalk frequency components CT, the spectrum of the reflection profile is determined, by transforming the residual reflection profile from the time domain to the frequency domain. This is preferably carried out by a frequency transformation, which is discrete in the time domain and discrete in the frequency domain. Preferably, the Fast Fourier Transform (FFT) is used. This yields a complex discrete frequency spectrum. The magnitude S of such a discrete frequency spectrum is the one shown in Figure 5, wherein the frequency scale as a continuous scale is plotted along the abscissa. In this example, the number of discrete values plotted is 4096.

For finally detecting the crosstalk frequency components CT, the complex discrete frequency spectrum is differentiated once, preferably by determining the first order differential signal. This yields a complex first derivative. Then, the magnitude of this first derivative is determined, which yields real values.

Figure 6 shows the magnitude FD of the first derivative of the residual reflection profile's spectrum. Those spectral indices of the first derivative's magnitude FD are determined, for which the first derivative's magnitude FD exceeds a spectral threshold T2. The complex spectrum is then modified in its complex values at those indices, which correspond to the determined spectral indices.

The threshold T2 may be determined, by determining a median value of the first derivative's magnitude FD. Preferably, the threshold T2 is chosen to this median value multiplied by a fixed factor. The fixed factor is preferably chosen within the range between the values 1 and 10. In a preferred embodiment, the fixed factor is chosen to the value 6.

Preferably, the threshold T2 is determined, by determining a median value of the first derivative's magnitude FD within a predefined spectral range FR. This spectral range FR has a lower frequency limit LL and an upper frequency limit UL. This median value may then be multiplied by a fixed factor. The fixed factor is preferably chosen within the range between the values 1 and 10. In a preferred embodiment, the fixed factor is chosen to the value 6.

Preferably, the modification of the complex spectral values of the spectrum is carried out not only for the spectral values at those spectral indices, for which the first derivative's magnitude FD exceeds the spectral threshold T2, but also for further values of the spectrum, whose further spectral indices lie within one or more predefined spectral windows, which are centered around the previously determined spectral indices.

Thus, preferably, a combined set of values corresponding to a combined set of discrete spectral indices is used for estimating the crosstalk frequency components and then modifying these components, wherein the combined set of discrete spectral indices is a combination of the previously determined set of discrete spectral indices and the further discrete spectral indices.

Preferably, the spectral window has a predefined width, which is preferably of a width of eight spectral indices. Preferably, this spectral window is a weighting window, which may in one alternative solution be a boxcar window applying weighting factors of 1 or 0. According to an alternative solution, the spectral window is a raised cosine window applying varying weighting factors within the range between 0 and 1.

The corresponding complex spectral values, which correspond to the spectral indices used for estimating the crosstalk frequency components, are modified to a respective mean value. For one of these corresponding complex spectral values, the respective complex mean value is determined as the mean of the adjacent spectral values, which are adjacent to the corresponding values to be modified.

Preferably, the estimation of the crosstalk frequency components and the modification of these components is limited to the predefined frequency range FR.

The modified complex spectrum is then transformed back from the frequency domain to the time domain, using preferably a time discrete and discrete frequency transform as an inverse transform. This inverse transform is preferably the inversed Fast Fourier Transform (IFFT).

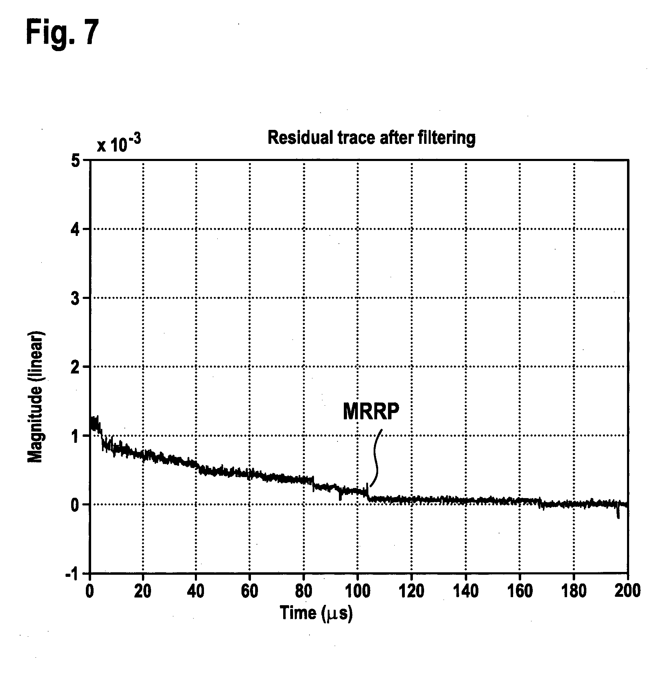

An obtained modified residual reflection profile is then provided from the step S4 to the step S5, as shown in Figure 1. Such an example of a modified residual reflection profile MRRP is shown in Figure 7 in the linear domain. As shown in Figure 1, the yielded modified residual reflection profile MRRP is then superposed with the previously estimated reflection peaks EP within a step S5. This yields an estimated reflection profile ERP.

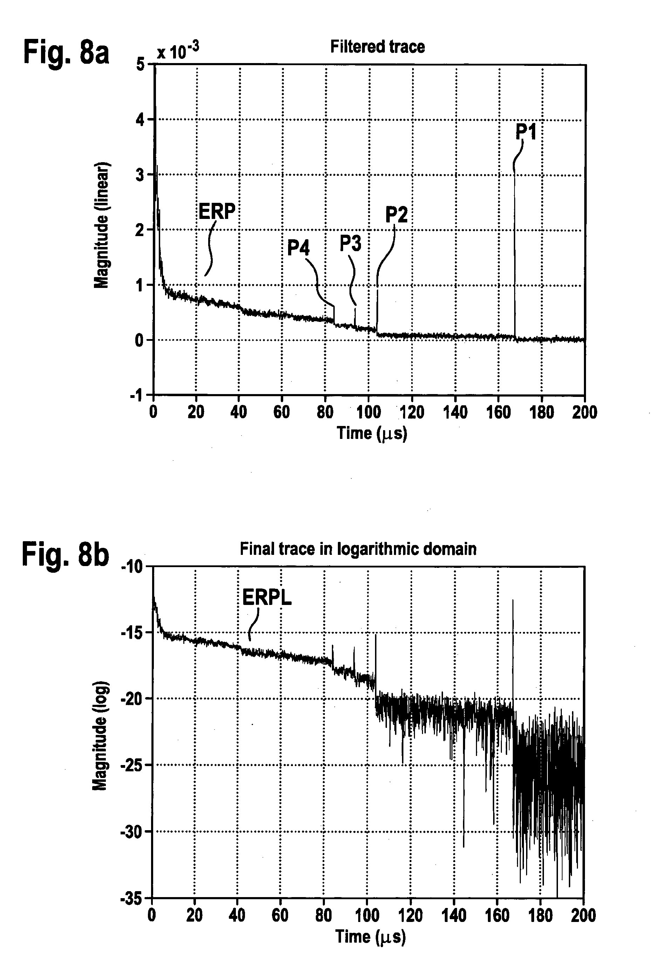

Figures 8a and 8b show an estimated reflection profile in the linear domain ERP as well as in the logarithmic domain ERPL, wherein these profiles are plotted over a time scale on the abcissa. By comparing the initially measured reflection profile RP of Figure 2a with the estimated reflection profile ERP of Figure 8a in the linear domain, it has to be noted, that the amount of crosstalk noise is reduced, while the impact of the step of reducing the crosstalk noise onto the reflection peaks is kept to a minimised amount. Looking at Figure 8a, one can clearly see that not only the initially visible reflection peaks P1, P2 and P3 can be observed, but also the reflection peak P4, which was previously not easily visible within the reflection profile RP of Figure 2a.

The proposed method is of advantage, since it first separates the estimated reflection peaks from the measured reflection profile, before then filtering the residual reflection profile, for reducing the amount of crosstalk noise. Furthermore, by later on superposing the estimated reflection peaks with the modified residual reflection profile, an estimated reflection profile is obtained, in which both aims, reducing crosstalk noise and preserving reflection peaks, is achieved.

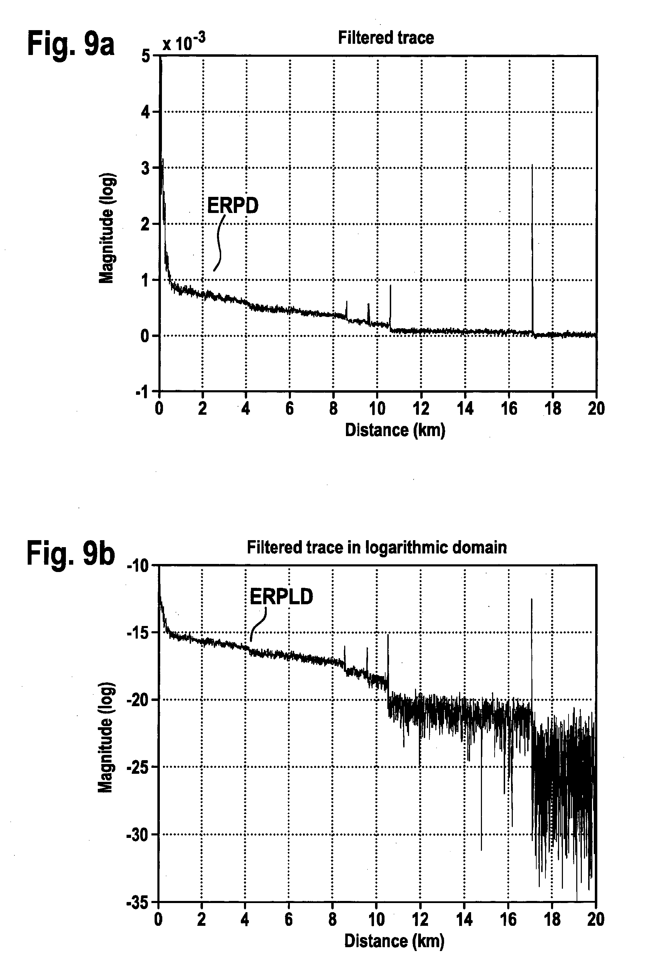

Figures 9a and 9b show an estimated reflection profile in the linear domain ERPD and in the logarithmic domain ERPDL, respectively, wherein these profiles are plotted over a distance scale on the abcissa.

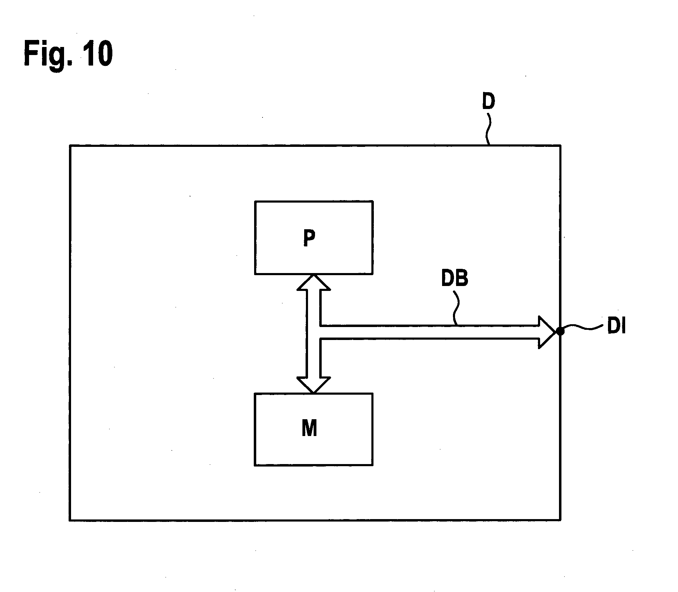

Figure 10 shows the proposed device for estimating a reflection profile of an optical channel according to a preferred embodiment.

The device D contains a data interface DI, over which data representing a measured reflection profile can be received.

Preferably, the data interface DI is connected via a data bus DB to a processing device P as well as a memory device M.

The memory device M and the processing device P are operable, such that they jointly carry out the different steps of the proposed method described in detail above.

Thus, the memory device M and the processing device P are operable, to jointly estimate reflection peaks within a measured reflection profile, and furthermore to determine a residual reflection profile, by removing the estimated reflection peaks from the measured reflection profile.

Furthermore, the devices P and M are operable to jointly modify estimated crosstalk frequency components within the residual reflection profile, for determining a modified residual reflection profile. Finally, the devices P and M are operable, to jointly superpose the estimated reflection peaks and the modified residual reflection profile, for determining the estimated reflection profile.

The functions of the various elements shown in Figure 10, including any functional block labelled as 'processor', may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term 'processor' or should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

It should be appreciated by those skilled in the art that any block diagrams herein represent conceptual views of illustrative circuitry embodying the principles of the invention. Similarly, it will be appreciated that any flow charts may be substantially represented in computer readable medium and so executed by a computer or processor, whether or not such computer or processor is explicitly shown.

## Claims

1. Method of estimating a reflection profile of an optical channel,
comprising
- providing a measured reflection profile (RP) of said optical channel in the time domain,
- estimating one or more estimated reflection peaks (P1, P2, P3) within said measured reflection profile (RP),
**characterized by**
- determining a residual reflection profile (RRP), by removing the estimated reflection peaks (P1, P2, P3) from said measured reflection profile (RP),
- determining a modified residual reflection profile (MRRP), by modifying one or more estimated crosstalk frequency components (CT) within said residual reflection profile (RRP),
- determining the estimated reflection profile (ERP), by superposing said estimated reflection peaks (P1, P2, P3) and said modified residual reflection profile (MRRP).

2. Method according to claim 1,
comprising furthermore
- estimating said reflection peaks (P1, P2, P3) in the time domain,
- removing said estimated reflection peaks (P1, P2, P3) in the time domain.

3. Method according to claim 2,
wherein the step of estimating said reflection peaks (P1, P2, P3) in the time domain includes
- determining a second derivative (SD) of said measured reflection profile (RP),
- determining those indices of said second derivative (SD), for which said second derivative (SD) exceeds a threshold (T1).

4. Method according to claim 3,
wherein said step of estimating said reflection peaks (P1, P2, P3) in the time domain includes
- using those values of said measured reflection profile (RP), whose indices correspond to the determined indices.

5. Method according to claim 4,
wherein said step of estimating said reflection peaks (P1, P2, P3) in the time domain includes
- using furthermore those values of said measured reflection profile (RP), whose indices lie within one or more predefined time-windows centered around said determined indices.

6. Method according to claim 3,
wherein said threshold (T1) is determined, using a median absolute value of said second derivative.

7. Method according to claim 1,
comprising furthermore
- estimating said crosstalk frequency components (CT) in the frequency domain,
- modifying said crosstalk frequency components (CT) in the frequency domain.

8. Method according to claim 7,
wherein the step of estimating said crosstalk frequency components (CT) in the frequency domain includes furthermore
- determining a spectrum (S) of said residual reflection profile (RRP), by transforming said residual reflection profile (RRP) from the time domain to the frequency domain,
- determining a first derivative (FD) of a magnitude of said spectrum (S),
- determining those spectral indices of said first derivative (FD), for which said first derivative (FD) exceeds a spectral threshold (T2).

9. Method according to claim 8,
wherein the step of modifying said crosstalk frequency components (CT) in the frequency domain includes furthermore
- modifying those values of said spectrum (S), whose spectral indices correspond to the determined spectral indices.

10. Method according to claim 9,
wherein the step of modifying said crosstalk frequency components (CT) in the frequency domain includes furthermore
- modifying also those values of said spectrum (S), whose spectral indices lie within a one or more predefined spectral-windows centered around said determined spectral indices.

11. Method according to claim 10,
wherein the step of modifying said crosstalk frequency components (CT) in the frequency domain includes furthermore
- setting spectral values within a respective spectral window to a respective mean value, wherein said mean value is determined as the mean of those spectral values, whose indices are adjacent to said respective spectral window.

12. Method according to claim 8,
wherein the step of determining said modified residual reflection profile (MRRP) includes furthermore
- determining said modified residual reflection profile (MRRP), by transforming the modified spectrum back to the time domain.

13. Device for estimating a reflection profile of an optical channel,
comprising
- at least one data interface (DI),
- at least one memory device (M),
- at least one processing device (P),
wherein said data interface (DI) is operable to receive a measured reflection profile (RP) of said optical channel in the time domain,
and wherein said memory device (M) and said processing device (P) are operable, to jointly estimate one or more estimated reflection peaks (P1, P2, P3) within said measured reflection profile (RP),
**characterized in that** said memory device (M) and said processing device (P) are furthermore operable, to jointly
- determine a residual reflection profile (RRP), by removing the estimated reflection peaks (P1, P2, P3) from said measured reflection profile (RP),
- determine a modified residual reflection profile (MRRP), by modifying one or more estimated crosstalk frequency components (CT) within said residual reflection profile (RRP), and
- determine the estimated reflection profile (ERP), by superposing said estimated reflection peaks (P1, P2, P3) and said modified residual reflection profile (MRRP).

## Patentansprüche

1. Verfahren zur Schätzung eines Reflexionsprofils eines optischen Kanals, umfassend:
- Bereitstellen eines gemessenen Reflexionsprofils (RP) des besagten optischen Kanals im Zeitbereich,
- Schätzen eines oder mehrerer der geschätzten Reflexionspeaks (P1, P2, P3) innerhalb des besagten gemessenen Reflexionsprofils (RP),
**gekennzeichnet durch**:
- Ermitteln eines Restreflexionsprofils (RRP) **durch** Entfernen der geschätzten Reflexionspeaks (P1, P2, P3) aus dem besagten gemessenen Reflexionsprofil (RP),
- Ermitteln eines veränderten Restreflexionsprofils (MRRP) **durch** Verändern einer oder mehrerer der geschätzten Nebensprechfrequenzkomponenten (CT) innerhalb des besagten Restreflexionsprofils (RRP),
- Ermitteln des geschätzten Reflexionsprofils (ERP) **durch** Überlagern der besagten geschätzten Reflexionspeaks (P1, P2, P3) und des besagten veränderten Restreflexionsprofils (MRRP).

2. Verfahren nach Anspruch 1,
weiterhin umfassend:
- Schätzen der besagten Reflexionspeaks (P1, P2, P3) im Zeitbereich,
- Entfernen der besagten geschätzten Reflexionspeaks (P1, P2, P3) im Zeitbereich.

3. Verfahren nach Anspruch 2,
wobei der Schritt des Schätzens der besagten Reflexionspeaks (P1, P2, P3) im Zeitbereich umfasst:
- Ermitteln einer zweiten Ableitung (SD) des besagten gemessenen Reflexionsprofils (RP),
- Ermitteln derjenigen Indizes der besagten zweiten Ableitung (SD), für welche die besagte zweite Ableitung (SD) einen Schwellenwert (T1) überschreitet.

4. Verfahren nach Anspruch 3,
wobei der besagte Schritt des Schätzens der besagten Reflexionspeaks (P1, P2, P3) in dem Zeitbereich umfasst:
- Verwenden derjenigen Werte des besagten gemessenen Reflexionsprofils (RP), deren Indizes den ermittelten Indizes entsprechen.

5. Verfahren nach Anspruch 4,
wobei der besagte Schritt des Schätzens der besagten Reflexionspeaks (P1, P2, P3) im Zeitbereich umfasst:
- Verwenden weiterhin derjenigen Werte des besagten gemessenen Reflexionsprofils (RP), deren Indizes innerhalb eines oder mehrerer vordefinierten, um die besagten ermittelten Indizes zentrierten Zeitfenster liegen.

6. Verfahren nach Anspruch 3,
wobei der besagte Schwellenwert (T1) unter Verwendung eines mittleren Absolutwertes der besagten Ableitung ermittelt wird.

7. Verfahren nach Anspruch 1,
weiterhin umfassend:
- Schätzen der besagten Nebensprechfrequenzkomponenten (CT) im Frequenzbereich,
- Verändern der besagten Nebensprechfrequenzkomponenten (CT) im Frequenzbereich.

8. Verfahren nach Anspruch 7,
wobei der Schritt des Schätzens der besagten Nebensprechfrequenzkomponenten (CT) im Frequenzbereich weiterhin umfasst:
- Ermitteln eines Spektrums (S) des besagten Restreflexionsprofils (RRP) durch Transformieren des besagten Restreflexionsprofils (RRP) vom Zeitbereich in den Frequenzbereich,
- Ermitteln einer ersten Ableitung (FD) einer Größe des besagten Spektrums (S),
- Ermitteln derjenigen Spektralindizes der besagten ersten Ableitung (FD), für welche die besagte erste Ableitung (FD) einen spektralen Schwellenwert (T2) überschreitet.

9. Verfahren nach Anspruch 8,
wobei der Schritt des Veränderns der besagten Nebensprechfrequenzkomponenten (CT) im Frequenzbereich weiterhin umfasst:
- Verändern derjenigen Werte des besagten Spektrums (S), deren Spektralindizes den ermittelten Spektralindizes entsprechen.

10. Verfahren nach Anspruch 9,
wobei der Schritt des Veränderns der besagten Nebensprechfrequenzkomponenten (CT) im Frequenzbereich weiterhin umfasst:
- Verändern ebenfalls derjenigen Werte des besagten Spektrums (S), deren Spektralindizes innerhalb eines oder mehrerer vordefinierten, um die besagten ermittelten Spektralindizes zentrierten Zeitfenster liegen.

11. Verfahren nach Anspruch 10,
wobei der Schritt des Veränderns der besagten Nebensprechfrequenzkomponenten (CT) im Frequenzbereich weiterhin umfasst:
- Einstellen der Spektralwerte innerhalb eines jeweiligen Spektralfensters auf einen jeweiligen Mittelwert, wobei der besagte Mittelwert als das Mittel derjenigen Spektralwerte, deren Indizes an das jeweilige Spektralfenster angrenzen, ermittelt wird.

12. Verfahren nach Anspruch 8,
wobei der Schritt des Ermittelns des besagten veränderten Restreflexionsprofils (MRRP) weiterhin umfasst:
- Ermitteln des besagten veränderten Restreflexionsprofils (MRRP), indem das veränderte Spektrum zurück in den Zeitbereich transformiert wird.

13. Vorrichtung zur Schätzung eines Reflexionsprofils eines optischen Kanals, umfassend:
- Mindestens eine Datenschnittstelle (DI),
- mindestens eine Speichervorrichtung (M),
- mindestens eine Verarbeitungsvorrichtung (P),
wobei die besagte Datenschnittstelle (DI) betriebsfähig ist, um ein gemessenes Reflexionsprofil (RP) des besagten optischen Kanals im Zeitbereich zu empfangen,
und wobei die besagte Speichervorrichtung (M) und die besagte Verarbeitungsvorrichtung (P) betriebsfähig sind, um gemeinsam einen oder mehrere geschätzte Reflexionspeaks (P1, P2, P3) innerhalb des besagten gemessenen Reflexionsprofils (RP) zu schätzen, **dadurch gekennzeichnet, dass** die besagte Speichervorrichtung (M) und die besagte Verarbeitungsvorrichtung (P) weiterhin betriebsfähig sind, um gemeinsam
- ein Restreflexionsprofil (RRP) durch Entfernen der geschätzten Reflexionspeaks (P1, P2, P3) aus dem besagten gemessenen Reflexionsprofil (RP) zu ermitteln,
- ein verändertes Restreflexionsprofil (MRRP) durch Verändern einer oder mehrerer der geschätzten Nebensprechfrequenzkomponenten (CT) innerhalb des besagten Restreflexionsprofils (RRP) zu ermitteln,
- das geschätzte Reflexionsprofil (ERP) durch Überlagern der besagten geschätzten Reflexionspeaks (P1, P2, P3) und des besagten veränderten Restreflexionsprofils (MRRP) zu ermitteln.

## Revendications

1. Procédé d'estimation d'un profil de réflexion d'un canal optique,
comprenant les étapes suivantes
- fournir un profil de réflexion mesuré (RP) dudit canal optique dans le domaine de temps,
- estimer un ou plusieurs pics de réflexion estimés (P1, P2, P3) à l'intérieur dudit profil de réflexion mesuré (RP),
**caractérisé par** les étapes suivantes
- déterminer un profil de réflexion résiduel (RRP), en supprimant les pics de réflexion estimés (P1, P2, P3) dudit profil de réflexion mesuré (RP),
- déterminer un profil de réflexion résiduel modifié (MRRP), en modifiant une ou plusieurs composantes de fréquence de diaphonie estimées (CT) à l'intérieur dudit profil de réflexion résiduel (RRP),
- déterminer le profil de réflexion estimé (ERP), en superposant lesdits pics de réflexion estimés (P1, P2, P3) et ledit profil de réflexion résiduel modifié (MRRP).

2. Procédé selon la revendication 1,
comprenant en outre les étapes suivantes
- estimer lesdits pics de réflexion (P1, P2, P3) dans le domaine de temps,
- supprimer lesdits pics de réflexion estimés (P1, P2, P3) dans le domaine de temps,

3. Procédé selon la revendication 2,
dans lequel l'étape d'estimation desdits pics de réflexion (P1, P2, P3) dans le domaine de temps comprend les étapes suivantes
- déterminer une deuxième dérivée (SD) dudit profil de réflexion mesuré (RP),
- déterminer les Indices de ladite deuxième dérivée (SD), pour lesquels ladite deuxième dérivée (SD) dépasse un seuil (T1).

4. Procédé selon la revendication 3,
dans lequel ladite étape d'estimation desdits pics de réflexion (P1, P2, P3) dans le domaine de temps comprend l'étape suivante
- utiliser les valeurs dudit profil de réflexion mesuré (RP), dont les indices correspondent aux indices déterminés.

5. Procédé selon la revendication 4,
dans lequel ladite étape d'estimation desdits pics de réflexion (P1, P2, P3) dans le domaine de temps comprend l'étape suivante
- utiliser en outre les valeurs dudit profil de réflexion mesuré (RP), dont les indices sont compris dans une ou plusieurs fenêtres temporelles prédéfinies centrées autour desdits indices déterminés.

6. Procédé selon la revendication 3,
dans lequel ledit seuil (T1) est déterminé, au moyen d'une valeur absolue médiane de ladite deuxième dérivée.

7. Procédé selon la revendication 1,
comprenant en outre les étapes suivantes
- estimer lesdites composantes de fréquence de diaphonie (CT) dans le domaine de fréquences,
- modifier lesdites composantes de fréquence de diaphonie (CT) dans le domaine de fréquences.

8. Procédé selon la revendication 7,
dans lequel l'étape d'estimation desdites composantes de fréquence de diaphonie (CT) dans le domaine de fréquences comprend en outre les étapes suivantes
- déterminer un spectre (S) dudit profil de réflexion résiduel (RRP), en faisant passer ledit profil de réflexion résiduel (RRP) du domaine de temps au domaine de fréquences,
- déterminer une première dérivée (FD) d'une amplitude dudit spectre (S),
- déterminer les indices spectraux de ladite première dérivée (FD), pour lesquels ladite première dérivée (FD) dépasse un seuil spectral (T2).

9. Procédé selon la revendication 8,
dans lequel l'étape de modification desdites composantes de fréquence de diaphonie (CT) dans le domaine de fréquences comprend en outre l'étape suivante
- modifier les valeurs dudit spectre (S), dont les indices spectraux correspondent aux indices spectraux déterminés.

10. Procédé selon la revendication 9,
dans lequel l'étape de modification desdites composantes de fréquence de diaphonie (CT) dans le domaine de fréquences comprend en outre l'étape suivante
- modifier également les valeurs dudit spectre (S), dont les indices spectraux sont compris dans une ou plusieurs fenêtres spectrales prédéfinies centrées autour desdits indices spectraux déterminés.

11. Procédé selon la revendication 10,
dans lequel l'étape de modification desdites composantes de fréquence de diaphonie (CT) dans le domaine de fréquences comprend en outre l'étape suivante
- régler les valeurs spectrales à l'intérieur d'une fenêtre spectrale respective sur une valeur moyenne respective, dans lequel ladite valeur moyenne est déterminée comme la moyenne de ces valeurs spectrales, dont les indices sont adjacents à ladite fenêtre spectrale respective.

12. Procédé selon la revendication 8,
dans lequel l'étape de détermination dudit profil de réflexion résiduel modifié (MRRP) comprend en outre l'étape suivante
- déterminer ledit profil de réflexion résiduel modifié (MRRP), en faisant passer le spectre modifié de nouveau dans le domaine de temps.

13. Dispositif pour estimer un profil de réflexion d'un canal optique,
comprenant
- au moins une interface de données (DI)
- au moins un dispositif de mémoire (M),
- au moins un dispositif de traitement (P),
dans lequel ladite interface de données (DI) permet de recevoir un profil de réflexion mesuré (RP) dudit canal optique dans le domaine de temps,
et dans lequel ledit dispositif de mémoire (M) et ledit dispositif de traitement (P) permettent d'estimer conjointement un ou plusieurs pics de réflexion estimés (P1, P2, P3) à l'intérieur dudit profil de réflexion mesuré (RP),
**caractérisé en ce que** ledit dispositif de mémoire (M) et ledit dispositif de traitement (P) permettent en outre conjointement
- de déterminer un profil de réflexion résiduel (RRP), en supprimant les pics de réflexion estimés (P1, P2, P3) dudit profil de réflexion mesuré (RP),
- de déterminer un profil de réflexion résiduel modifié (MRRP), en modifiant une ou plusieurs composantes de fréquence de diaphonie estimées (CT) à l'intérieur dudit profil de réflexion résiduel (RRP), et
- de déterminer le profil de réflexion estimé (ERP), en superposant lesdits pics de réflexion estimés (P1, P2, P3) et ledit profil de réflexion résiduel modifié (MRRP).
